# EUROPEAN PATENT SPECIFICATION

(11) **EP 2 214 377 B1**
(45) Date of publication and mention of the grant of the patent: **01.03.2017**
(21) Application number: 10162842.8
(22) Date of filing: 23.03.2007
(51) Int. Cl.: H04L 29/06

(54) **METHOD AND SYSTEM FOR ORCHESTRATION OF CONTENT PROCESSING IN MOBILE DELIVERY FRAMEWORKS**
VERFAHREN UND SYSTEM ZUR ORCHESTRIERUNG DER INHALTSVERARBEITUNG IN MOBILEN ÜBERGABERAHMEN
PROCÉDÉ ET SYSTÈME D'ORGANISATION D'UN TRAITEMENT DE CONTENU DANS DES STRUCTURES DE LIVRAISON MOBILE

(43) Date of publication of application: 04.08.2010
(62) Divisional of application: 07104833.4
(73) Proprietor: BlackBerry Limited, Waterloo, ON N2K 0A7 (CA)
(72) Inventor: Shenfield, Michael, Richmond Hill Ontario L4C 3S9 (CA)
(74) Representative: Moore, Barry

(56) References cited:
- US-A1- 2004 073 613
- US-A1- 2005 240 530
- HENRIK FRYSTYK NIELSEN ET AL: "Web Services Routing Protocol (WS-Routing)" INTERNET CITATION 1 January 2001 (2001-01-01), XP002427675 Retrieved from the Internet: URL:http://msdn2.microsoft.com/en-us/libra ry/ms951249.aspx [retrieved on 2007-04-02]

## Description

The present disclosure relates generally to mobile content delivery and in particular to the utilization of enablers to facilitate mobile content delivery.

The users of mobile devices or mobile user equipment (UE) are increasingly becoming more sophisticated in terms of the functionality that they require from their mobile devices and the way that they access data from the mobile devices.

Dynamic content delivery allows users to have subscribed information or data dynamically delivered to them rather than having to go and seek out the data. Examples of data could include stock quotes, weather updates, traffic updates, dynamic wallpaper, ads, applications or other data desirable to the user.

Content delivery often requires various enablers on both the server side and on the device side. These enablers are not part of the core functionality of a delivery enabler and a system and method is required in order to coordinate content processing with other enablers.

US2004/073613 discloses a method for automatic digital document processing comprising embedding a processing profile with a digital document, and processing the digital document in response to the embedded processing profile.

### GENERAL

The present system and method may provide for the embedding of external references and content processing coordination rules inside mobile content delivery metadata. In particular the present teaching provides a method as detailed in the independent claims. Advantageous features are provided in the dependent claims. An element, delivery server and delivery client are also provided as detailed in the appended claims.

A content provider may embed metadata for various processing elements within the delivery framework. Included in the metadata are instructions for the content delivery enabler. Further, external namespace declarations may be provided for external enablers. Namespaces referring to the XML schemas representing binding to external enablers may be included in order to coordinate processing of mobile content while a content package is being delivered. This is accomplished by embedding elements and attributes defined in corresponding XML schemas within an XML element for the processing state.

Action verbs can be used to map coordination instructions to external enabler functions. This level of indirection allows for low coupling between services.

### BRIEF DESCRIPTION OF THE DRAWINGS

The present disclosure will be better understood with reference to the drawings in which:
**Figure 1** is a block diagram showing logical components within a delivery architecture;
**Figure 2** is a block diagram illustrating flow of metadata between the logical components of **Figure 1****.**
**Figure 3** is a block diagram illustrating an enveloped model for metadata processing between the logical components of **Figure 1****.**
**Figure 4** is a block diagram showing an exemplary content package including content and a metadata envelope;
**Figure 5** is a block diagram showing a function block;
**Figure 6** is a state diagram showing exemplary coordination of metadata between a content delivery enabler and external enablers; and
**Figure 7** is a block diagram showing an exemplary mobile device that can be used in associate with the method and system of the present disclosure.

### DESCRIPTION OF PREFERRED EMBODIMENTS

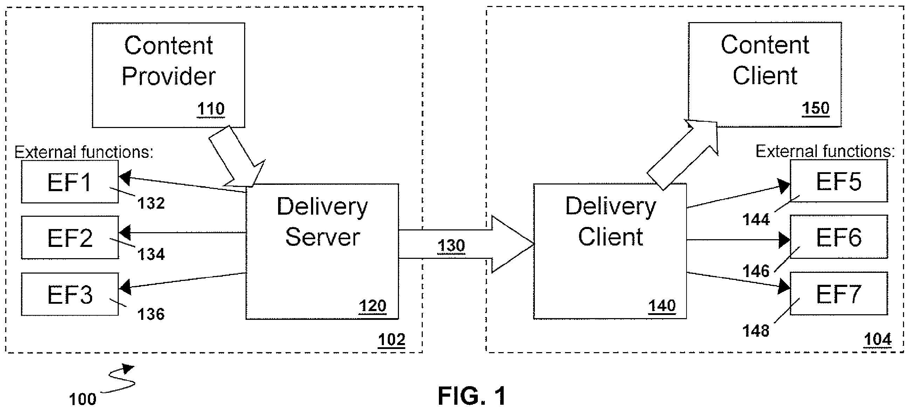

Reference is now made to **Figure 1****.** A push system for delivering dynamic content to a client application is illustrated. The system of **Figure 1** is a simplified system and shows logical components that need to be in a dynamic content delivery architecture. However, as will be appreciated by those skilled in the art, other components could exist or various components could be grouped together.

Architecture **100** includes a content provider **110.** Content provider **110** is arranged to provide dynamic content to users. This can include, for example, a website selling books. Content provider **110** may periodically provide a list of newly released books which can either be sent to subscribers that are subscribed to the website or to a delivery server that manages the subscriptions.

A delivery server **120** communicates over a wireless network **130** with a delivery client **140** that is located on a mobile device in a preferred embodiment. Delivery client **140** receives the content that is being delivered from content provider **110** and can communicate the content with a content client **150.** Content client **150** ultimately consumes the content.

As will be appreciated by those skilled in the art, an enabler in the present disclosure is equivalent to a framework. Thus, the delivery enabler comprises delivery server **120** and delivery client **140.**

As will be appreciated by those skilled in the art, various external functions may be required for the delivery of the content to the content client **150.** These external functions can exist both on the server side **102** and the device side **104.** In **Figure 1****,** the external functions are shown as external functions **132, 134** and **136** on server side **102** and external functions **144, 146** and **148** on device side **104.** Examples of external functions can include but are not limited to presence, location, content screening, and compression, among others.

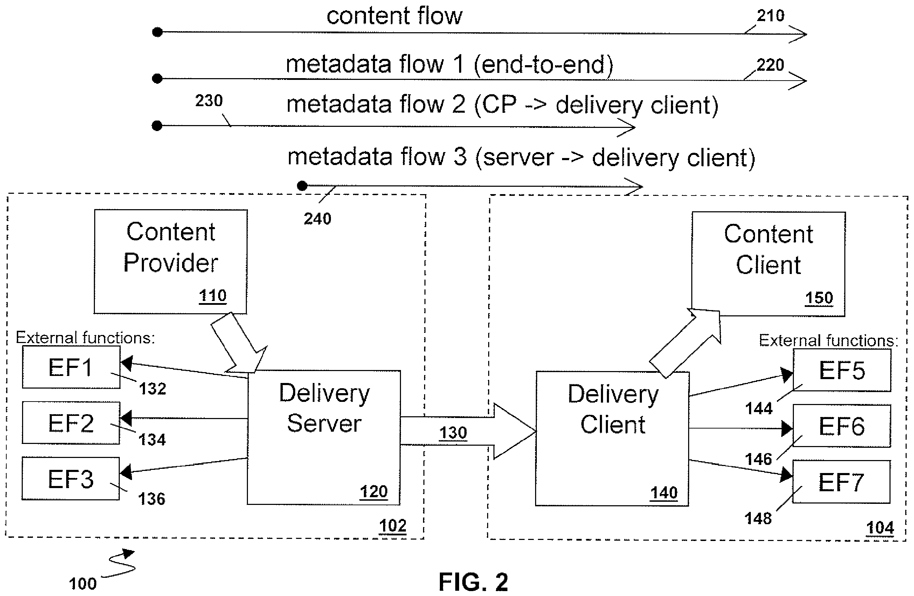

Reference is now made to **Figure 2****.** In order to add intelligence to a system, content is associated with metadata. Metadata, in this case, is defined as data that can be used by a processing element to manipulate the content. As will be appreciated, a generic content delivery system requires metadata to allow various content providers and content clients to exist within the system. The metadata can be in various forms, including processing parameters or rules, or a processing handler, code or reference provided directly or a link to a processing handler, code or rules in another location.

As can be seen in **Figure 2****,** content passes from content provider **110** to content client **150,** as illustrated by arrow **210.** Metadata, which provides instructions to various components within the architecture **100** can also pass between components within architecture **100,** usually along with the content. For example, arrow **220** illustrates metadata for the content client that originates at the content provider **110** and is opaque to the delivery system until it reaches a content client **150.**

Arrow **230** shows metadata created by a content provider **110** that is intended for delivery client **140** and thus only flows to the delivery client **140.**

Arrow **240** illustrates metadata generated by delivery server **120** and is intended for delivery client **140** and thus is first associated with the content at delivery server **120** and stripped from the content at delivery client **140.** Examples of where this could occur include agreements between a user and a service provider regarding a billing plan and the level of service to be provided, where the service provider can use the metadata to limit the services available or provide enhanced services.

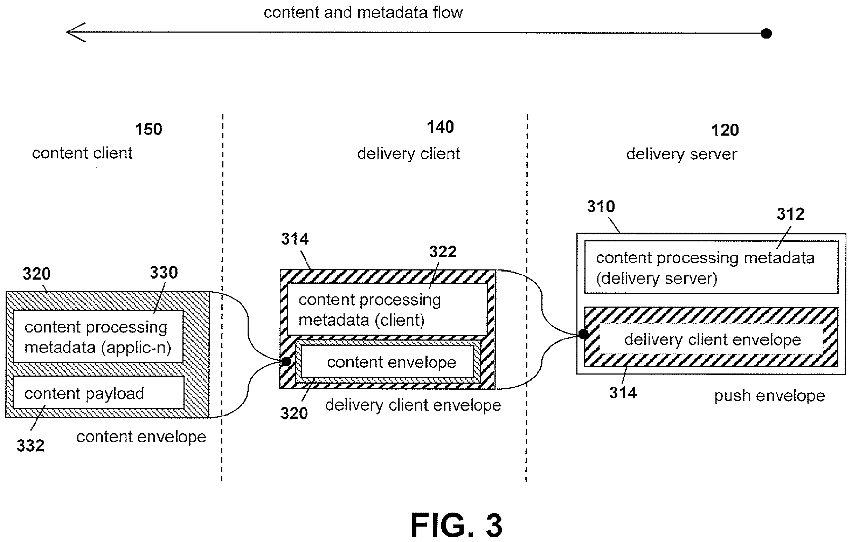

Reference is now made to **Figure 3. Figure 3** illustrates a multilayered envelope model for content metadata.

A delivery server **120** receives a push envelope **310** that includes content processing metadata **312** for the delivery server **120** and a delivery client envelope **314.** The delivery server **120** extracts the content processing metadata **312** and uses this metadata to process delivery client envelope **314.** Metadata **312** dictates to delivery server **120** what to do with the delivery client envelope **314.**

Delivery client envelope **314** is passed to delivery client **140,** where it is broken into a content envelope **320** and a content processing metadata **322.** Content processing metadata **322** is used by delivery client **140** to process the content envelope **320.** For example, this can be used to instruct delivery client **140** to perform a replacement of previously delivered content envelope **320** with the latest envelope if content client **150** is only interested in the latest version of the content.

Content envelope **320** is passed to content client **150.** Content envelope **320** includes content processing metadata **330** for the content client **150** and content payload **332** that is to be consumed by the content client **150.**

As will be appreciate by those skilled in the art, the nesting of envelopes in accordance with **Figure 3** provides for a rich dynamic environment in which processing can occur at any processing element of the architecture and in which the content provider **110** can specify how specific content is to be dealt with. In one embodiment, metadata is directed to a particular logical element and is opaque to other processing elements.

As will further be appreciated, metadata may only be included for various stages of the delivery of content. For example, metadata may only be required between the delivery server **120** and delivery client **140** and thus no metadata for content client **150** would be included.

Other alternatives would be evident to those skilled in the art.

While the above describes metadata for a content delivery enabler , in some cases a mobile content delivery enabler may need to engage other frameworks and enablers while delivering content to a content client **150.** Similarly, a delivery enabler may need to engage other frameworks and enablers while delivering the content to content client **150.** As indicated above, examples of external functions include presence, location, content screening, compression, among others. For example, an external enabler may be a presence enabler. A user may have specified a rule that certain content should only be delivered when the user is in a home network in order to avoid data roaming charges. Such an enabler needs to use the functionality of other enablers such as a location enabler to find where the mobile device is located.

Other examples of enablers include content screening that could prevent certain types of content from being delivered to the mobile device.

On the device side, an example of an enabler may be a compression enabler that would need to decompress certain content before it is passed to a content client **150.**

A content delivery enabler would not typically have the functionality of the external enablers and thus needs to access external enablers to provide for a rich content delivery framework.

As will be appreciated by those skilled in the art, content should be opaque for the delivery framework. The only way to therefore indicate the need for external content processing and to coordinate this processing is through the use of metadata.

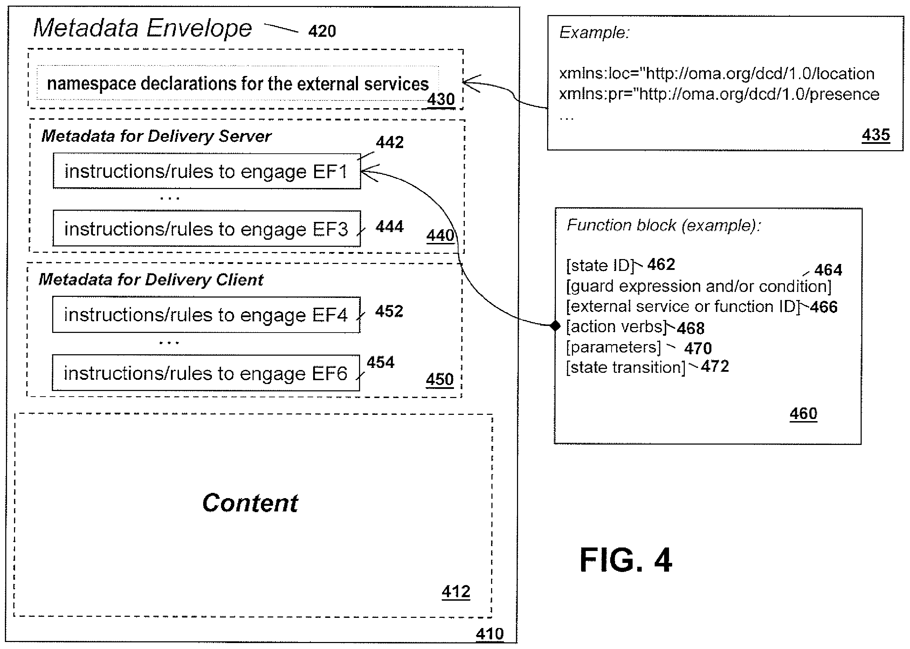

Reference is now made to **Figure 4. Figure 4** illustrates an exemplary content package **410** received from a content provider such as content provider **110** from **Figure 1****.**

Content package **410** includes content **412** and a metadata envelope **420.** As indicated above, content **412** should be opaque for the delivery framework. Therefore, the only way to indicate the need for external content processing, and to co-ordinate this processing, is through the use of the metadata in metadata envelope **420.**

Metadata envelope **420** includes a namespace declaration box **430,** which allows for namespace declarations for external services that are to be used for processing the content **412.** Two exemplary namespace declarations are shown with reference numeral **435.**

Metadata envelope **420** further preferably includes a metadata block **440** for processing by a delivery server such as delivery server **120** from **Figure 1****.**

Metadata block **440** includes various metadata for processing by the delivery server. Metadata block **440** further includes various function blocks to engage external functions. These are illustrated by function blocks **442** and **444** in **Figure 4****.**

Metadata envelope **420** also includes a metadata block **450** for processing by a delivery client such as delivery client **140** from **Figure 1****.** Metadata block **450** includes metadata to be processed by the delivery client along with function blocks **452** and **454.**

As will be appreciated by those skilled in the art, the use of two function blocks to engage external functions in block **450** is merely an example and the present disclosure is not meant to be limited to a certain number of external functions engaged by external function blocks. In other words, metadata block **440** or metadata block **450** could include no instructions or rules to engage external functions and thus no function blocks, or could engage multiple external functions through many function blocks.

An example of a function block, such as function block **442,** is illustrated by reference numeral **460.** Reference numeral **460** points to a logical representation of a function block. In the example of **Figure 4****,** the function block is a node in a state tree.

The function block preferably includes a state identifier **462,** which identifies the state of the function block in state tree.

The function block may further include a guard expression and/or condition **464,** which includes a logical expression that, if satisfied, causes the processing for the state to be performed.

The function block further could include an external service or function identifier **466** to identify the external service or function being utilized.

The function block could further include action verbs **468** defining what function of an external service the content delivery enabler should use.

The function block could further include parameters **470** defining the list of parameters that needed to be passed to the external enabler when the function defined in this function block is invoked.

The function block could further include a state transition **472** based on the results of the action verbs to indicate which state to move to next.

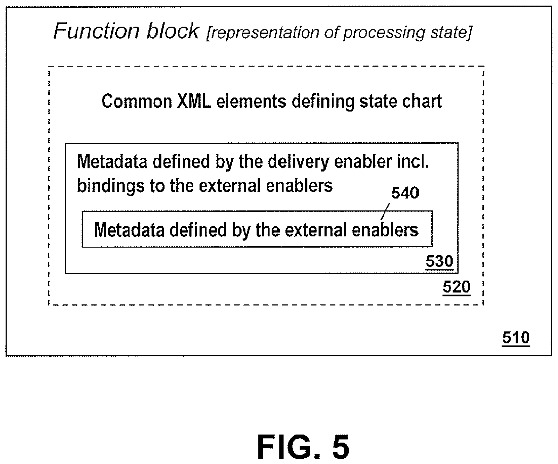

Reference is now made to **Figure 5. Figure 5** illustrates a layered structure of function block **510,** which is a representation of a processing state. Various embedded blocks exist within function block **510** as described below.

A first block **520** is a set of common XML elements defining state chart. As will be appreciated by those skilled in the art, the term "element" is a broad term and includes a subset of an XML document that starts and ends with corresponding XML tags.

Block **520** includes elements that are referenced by the namespace defining XML syntax for a state chart representation language. Examples include state chart extensible markup language (SCXML), business process execution language (BPEL) and XProc, among others.

A further embedded block **530** contains metadata defined by the delivery enabler, including bindings to external enablers. Block **530** includes XML that is referenced by the namespace for the delivery enabler and includes all XML bindings to external enablers and internal processing instructions, if any.

A further embedded block **540** is metadata defined for use by external enablers. This block is referenced by the namespace for the external enabler and includes elements defined in the external enabler schema. These elements are opaque for the delivery enabler.

As will be appreciated by those skilled in the art, the elements within block **530** specify a predefined behavior of the delivery enabler including binding of elements onto functions/parameters of the external enabler. These elements should be understood by the delivery enabler metadata interpretation layer. Conversely, the elements within block **540** are opaque for the delivery enabler and are passed to the external enabler "as is". These elements represent constructs defined by the external enabler schema and therefore are understood by the external enabler.

The above therefore provides a method for using name spaces and schemas representing bindings to external enablers in order to coordinate processing of mobile content while in delivery. This is accomplished by embedding elements defined in corresponding schemas within an XML element for the processing state.

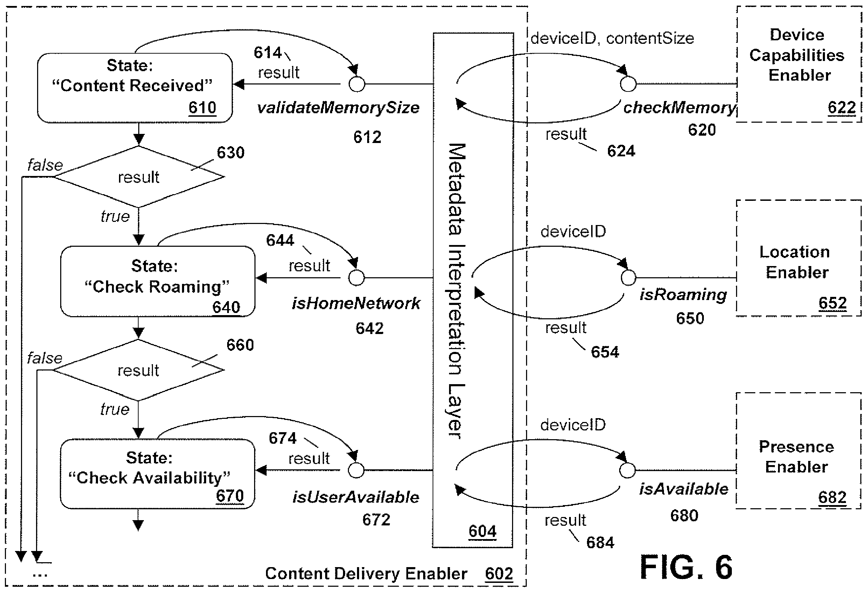

The above will be more clearly understood with reference to the following example SCXML code segment and reference to **Figure 6****.**

The following illustrates an example of co-ordination metadata expressed in SCXML:

```
          <scxml xmlns="http://www.w3.org/2005/07/scxml"
                     xmlns:dcd="http://oma.org/dcd/1.0"
                     xmlns:dp="http://oma.org/dcd/1.0/dcap"
                     xmlns:l="http://xyz.com/location/1.0/"
                     xmlns:p="http://abc.net/presence/1.0/"
                     initialstate="Content Received">
          <state id="Content Received">
            <invoke src="checkMemory">
                <dcd:action function-id="DCAP:checkMemory">
                     <dcd:verb>validateMemorySize</dc:verb>
                     <dcd:param>ContentHeader:deviceID<dcd:param>
                     <dcd:param>ContentHeader:contentSize<dcd:param>
                     <dp:function>checkMemory</dp:function>
                     <dp:resultType>boolean</dp:resultType>
                </dcd:action>
             </invoke>
             <transition event="success" cond="checkMemory.result"
          target="Check Roaming"/>
             <transition event="failure" cond="!checkMemory.result"
          target="Check Fragmentation"/>
          </state>
          <state id="Check Roaming">
                <invoke src="isRoaming">
                 <dcd:action function-id="LOC:isRoaming">
                     <dcd :verb>isHomeNetwork</dcd :verb>
                     <dcd:param>ContentHeader:deviceID<dcd:param>
                     <dcd:someExoticElement>"if not in
          Finiand"<dcd:someExoticElement>
                     <I:name>isRoaming</I:name>
                     <I:param>"ignoreNetworkAgreements=true"</I:param>
                 </dcd:action>
             </invoke>
                <transition event="success" cond="isRoaming.result"
          target="Check Availability"/>
                <transition event="failure" cond="!isRoaming.result"
          target="Send Rejected"/>
          </state>
          <state id="Check Availability">
            <invoke src="isAvailable">
                 <dcd:action function-id="PRES:isAvailable">
                     ...
                 </dcd:action>
          ...
          </scxml>
```

The first five lines of the code segment above are part of block **430** from **Figure 4****.** Specifically, these are namespace declarations for the XML version, as well as namespace declarations for the dynamic content delivery, a device capabilities enabler, a device location enabler and a device presence enabler. As will be appreciated, these are merely examples of various enablers that could be used and declared as part of the namespace declarations. Further, the namespaces declarations shown above are merely included as an example and do not represent real URLs for enablers.

The next line of the code indicates 'initialstate = "content received" thins shows the initial state to proceed to for the content processing.

The next line indicates 'state id = "content received" thins is part of block **520** of **Figure 5** and defines the state of the function block.

Further, the line 'invoke src = "checkMemory" is part of block **520** of **Figure 5** and is telling the SCXML to invoke an external function.

The next line indicates 'dcd:action function-id="DCAP:checkMemory" '. This action defines that the external function checkMemory on the delivery capabilities enabler should be utilized.

The next line is <dcd:verb> validateMemorySize </dcd:verb>. This is an action verb that the dynamic content delivery enabler understands.

The next two lines indicate parameters that the external function checkMemory uses.

The next line is <dp:function>checkMemory</dp:function>. This maps the dcd action verb validateMemorySize to the external function. In this case, the external function is checkMemory and is part of the device capability enabler defined using the name "dp" in the namespace definition.

The next line defines the results type that is expected from the external function.

From the above code segment, the dcd:action, dcd:verb and dcd:parameters belong to block **530** of **Figure 5****.** These are a predefined behavior of the delivery enabler and include binding of the elements onto functions or parameters of the external enabler.

The lines dp:function and dp:result belong to block **540** and are opaque to the dcd enabler.

The line: <transition event="success" cond="checkMemory.result" target="Check Roaming"/> is a check to see whether or not a specific event occurred and a condition has been satisfied. If the event has occurred and the condition has been satisfied, then this line defines the next state to proceed to. In this case, the next state is "Check Roaming".

In the line <transition event="failure" cond="!isRoaming.result" target="Send Rejected"/> the event fails and the check memory returns 'false', then the state proceeds to "Check Fragmentation".

As will be appreciated by those skilled in the art, the transition events defined above belong to block **520** of **Figure 5****.**

Referring to **Figure 6****,** the above is illustrated with reference to the state diagrams. Specifically, the initial state **610** is state: "Content Received". An action verb validateMemorySize is used within content delivery enabler **602** and is interpreted at the metadata interpretation layer **604.**

In metadata interpretation layer **604,** the external function checkMemory **620** is invoked, passing device parameters 'deviceID' and 'contentSize'. Device capabilities enabler **622** then returns a result **624** back to metadata interpretation layer **604,** which then passes the parameter back through the validateMemorySize **612** verb, and the result **614** is passed back into state **610.**

The result **614** is checked at step **630** and if true, the state transitions to "Check Roaming" state **640** and if false, the state transitions to a "Check Fragmentation" state [not shown].

Referring again to the code segment above, a further function block is defined by 'state ID = "check roaming" '.

The action is defined for the dynamic content delivery using function ID "LOC:isRoaming".

The expression <dcd:verb> isHomeNetwork </dcd:verb> provides an action verb. The parameters for the action verb are defined in the next line as ContentHeader:deviceID.

The dynamic content delivery can use any arbitrary elements defined in its schema such as the expression "someExoticElement".

The next two lines, namely:

```
     <I:name>isRoaming</I:name>
     <I:param>"ignoreNetworkAgreements=true" </I:param>
```

define an external function that is mapped to the verb "isHomeNetwork". The external function is the "isRoaming" function and includes a parameter of "ignoreNetworkAgreements". As will be appreciated by those skilled in the art, the location enabler is adapted to handle this function and the function is opaque to the dynamic content delivery enabler.

The next two lines define the transitions. If the "isRoaming" returns a true, then the state transition transitions to a check availability state. If the "is roaming" result is false, then the state transitions to a "Send Rejected" state.

This is illustrated in **Figure 6****.** In **Figure 6****,** the state **640** is the "Check Roaming" state and the action verb **642** "isHomeNetwork" can be used from the state **640.** Metadata interpretation layer **604** interprets the "isHomeNetwork" and uses the action verb to invoke an "isRoaming" function **650** at a location enabler **652.**

Location enabler **652** returns a result **654,** which is propagated through metadata interpretation layer **604** to the "isHomeNetwork" verb **642,** which returns a result **644** to the check roaming state **640.**

The result is then checked at **660,** which corresponds to the "transition" commands in the code above. If the result in **660** is true, the state transitions to state **670** to a "Check Availability" state. Otherwise, the state proceeds to a "Send Rejected" state [not shown].

Similar functionality applies for the state **670.** The action verb in this case is "isUserAvailable". The metadata interpretation layer **604** uses the "isUserAvailable" verb **672** and invokes the "isAvailable" function **680** of presence enabler **682.** A result **684** is returned and is then returned as a result **674** to state **670.** Based on this, a state transition may occur.

The above therefore provides a method for using external action groups to map coordination instructions to external enabler functions. An interpretation layer for mapping action verbs defined in the delivery enabler onto external functions allows low coupling between services.

As will be appreciated by those skilled in the art, the coordination metadata is defined using XML representation of a state diagram such as Harel state, UML state diagram, Petri net, among others. Each state in the diagram corresponds to a function exposed by an external mobile service that could be used to process mobile content while in delivery. External services, frameworks and enablers, such as location, presence, delivery capabilities, user profile, among others, could be used to personalize content delivery and content presentation according to the device and user settings, user location and state. The service could have more than one function exposed.

Functions and services are identified by identifiers that could be a uniform resource identifier (URI), name, a global unique identifier (GUID), a tag, among others.

Guard expressions, action verbs, parameters and results are expressed in terms defined by the schema of the delivery enabler and delivery framework, and/or by the schema of the particular external service. The delivery enabler schema defines XML elements understood by the delivery enabler and includes predefined bindings to external enabler functions and parameters. The schema for the external enabler defines additional parameters that could assist processing of mobile content by the external enabler. These parameters are opaque to the delivery enabler and embedded inside the delivery enabler metadata using an XML schema extension mechanism.

The delivery enabler can be on either the device side or the service side, as indicated above. In a further embodiment, all server functionality may be moved to the device side, and thus only a device side could exist for the delivery enabler.

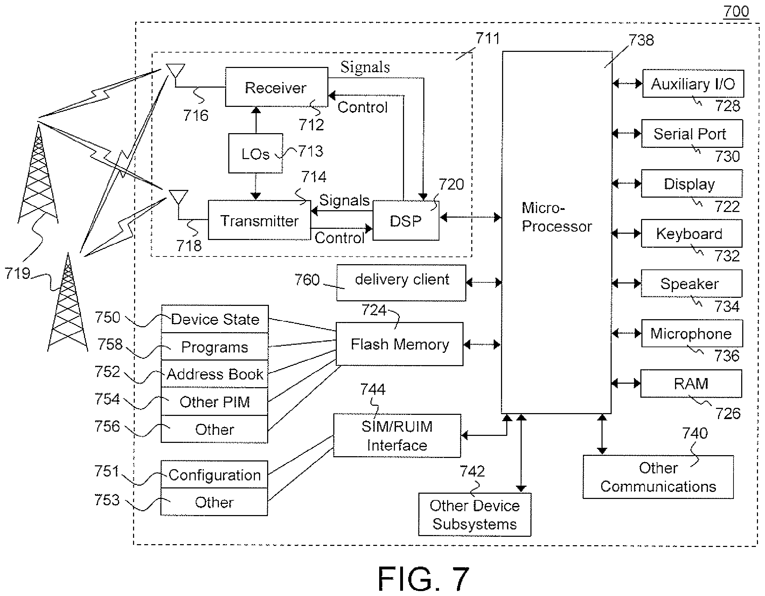

The delivery client and content client can be found on any mobile device. One particular mobile device that is illustrated as an example is provided in **Figure 7****.** Reference is now made to **Figure 7****.**

**Figure 7** is a block diagram illustrating a mobile station apt to be used with preferred embodiments of the apparatus and method of the present application. Mobile station **700** is preferably a two-way wireless communication device having at least voice and data communication capabilities. Mobile station **700** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **700** is enabled for two-way communication, it will incorporate a communication subsystem **711,** including both a receiver **712** and a transmitter **714,** as well as associated components such as one or more, preferably embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile station **700.** A CDMA mobile station may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 64K of memory and hold many key configuration **751,** and other information **753** such as identification, and subscriber related information.

When required network registration or activation procedures have been completed, mobile station **700** may send and receive communication signals over the network **719.** As illustrated in **Figure 7****,** network **719** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **716** through communication network **719** are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile station **700** preferably includes a microprocessor **738** which controls the overall operation of the device. Communication functions, including at least data and voice communications, are performed through communication subsystem **711.** Microprocessor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the microprocessor **738** is preferably stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and **756.** These different storage types indicate that each program can allocate a portion of flash memory **724** for their own data storage requirements. Microprocessor **738,** in addition to its operating system functions, preferably enables execution of software applications on the mobile station. A predetermined set of applications that control basic operations, including at least data and voice communication applications for example, will normally be installed on mobile station **700** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **719.** In a preferred embodiment, the PIM data items are seamlessly integrated, synchronized and updated, via the wireless network **719,** with the mobile station user's corresponding data items stored or associated with a host computer system. Further applications may also be loaded onto the mobile station **700** through the network **719,** an auxiliary I/O subsystem **728,** serial port **730,** short-range communications subsystem **740** or any other suitable subsystem **742,** and installed by a user in the RAM **726** or preferably a non-volatile store (not shown) for execution by the microprocessor **738.** Such flexibility in application installation increases the functionality of the device and may provide enhanced on-device functions, communication-related functions, or both. For example, secure communication applications may enable electronic commerce functions and other such financial transactions to be performed using the mobile station **700.**

In a data communication mode, a received signal such as a text message or web page download will be processed by the communication subsystem **711** and input to the microprocessor **738,** which preferably further processes the received signal for output to the display **722,** or alternatively to an auxiliary I/O device **728.** A delivery client **760,** which could be equivalent to delivery client **140** could also process the input.

A user of mobile station **700** may also compose data items such as email messages for example, using the keyboard **732,** which is preferably a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile station **700** is similar, except that received signals would preferably be output to a speaker **734** and signals for transmission would be generated by a microphone **736.** Alternative voice or audio I/O subsystems, such as a voice message recording subsystem, may also be implemented on mobile station **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7****,** would normally be implemented in a personal digital assistant (PDA)-type mobile station for which synchronization with a user's desktop computer (not shown) may be desirable, but is an optional device component. Such a port **730** would enable a user to set preferences through an external device or software application and would extend the capabilities of mobile station **700** by providing for information or software downloads to mobile station **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile station **700** and different systems or devices, which need not necessarily be similar devices. For example, the subsystem **740** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method comprising:
providing content (412) for a content client (150);
embedding a reference to an external enabler (132, 134, 136, 144, 146, 148) within a metadata (430) envelope associated with the content (412), the external enabler being used to operate on said content prior to one or both of consumption and presentation of the content at the content client (150); and
inserting, into the metadata (440, 450) envelope for a delivery enabler (120, 140), content processing instructions (442, 444, 452, 454) to engage, via the reference, functionality of the external enabler for processing the content by the delivery enabler prior to the one or both of consumption of the content and presentation of the content at the content client (150).

2. The method of claim 1, wherein the processing of the content includes at least one of content manipulation, content screening, content compression and content decompression.

3. The method of claim 1 or claim 2, wherein the metadata for the delivery enabler is included as part of the content.

4. The method of claim 1 or claim 2, wherein the metadata for the delivery enabler is provided in a package along with the content.

5. The method of any one of claims 1 to 4, wherein the metadata for the delivery enabler is embedded by a content provider.

6. The method of any one of claims 1 to 4, wherein the metadata for the delivery enabler is embedded by a delivery server.

7. The method of any one of claims 1 to 6 wherein the content processing instructions are expressed in extensible markup language 'XML'.

8. The method of any one of claims 1 to 7, wherein the metadata associated with the content comprises a reference to an extensible markup language namespace for the external enabler.

9. The method of any one of claims 1 to 8, wherein the metadata comprises a reference to an extensible markup language schema defining syntax for the referenced external enabler.

10. An element (110, 120) within a mobile delivery framework configured to perform the method of any one of claims 1 to 9.

11. The element of claim 10, wherein the element is one of a content provider (110) and a delivery server (120).

12. A method comprising:
retrieving, from a metadata (430, 440, 450) envelope associated with content (412) provided for a content client (150), a reference to an external enabler (132, 134, 136, 144, 146, 148) which is usable to operate on content prior to one or both of consumption and presentation of the content at the content client;
extracting, from the metadata (430, 440, 450) envelope, content processing instructions to engage functionality of the external enabler; and
engaging the external enabler via the reference for processing the content by a delivery enabler according to the content processing instructions.

13. The method of claim 12? wherein the external enabler is at least one of a presence enabler, a location enabler, a content screening enabler, a compression enabler and a decompression enabler.

14. A delivery server configured to perform the method of claims 12 or 13.

15. A delivery client configured to perform the method of claims 12 or 13.

## Patentansprüche

1. Verfahren mit:
Bereitstellen von Inhalt (412) für einen Inhaltsclient (150),
Einbetten eines Verweises auf einen externen Befähiger (132, 134, 136, 144, 146, 148) in eine Metadaten-(430)-Hülle, die mit dem Inhalt (412) verknüpft ist, wobei der externe Befähiger dazu verwendet wird, vor einem oder beidem aus Konsum und Präsentation des Inhalts auf dem Inhaltsclient (150) auf dem Inhalt zu arbeiten, und
Einführen von Inhaltverarbeitungsanweisungen (442, 444, 452, 454) in die Metadaten-(440, 450)-Hülle für einen Auslieferungsbefähiger (120, 140), um über den Verweis Funktionalität des externen Befähigers zum Verarbeiten des Inhalts durch den Auslieferungsbefähiger vor dem einen oder beidem aus Konsum und Präsentation des Inhalts auf dem Inhaltsclient (150) in Anspruch zu nehmen.

2. Verfahren nach Anspruch 1, wobei das Verarbeiten des Inhalts mindestens eines aus Inhaltbeeinflussung, Inhaltfilterung, Inhaltskomprimierung und Inhaltsentpackung enthält.

3. Verfahren nach Anspruch 1 oder 2, wobei die Metadaten für den Auslieferungsbefähiger als Teil des Inhalts eingefügt wird.

4. Verfahren nach Anspruch 1 oder 2, wobei die Metadaten für den Auslieferungsbefähiger mit dem Inhalt zusammen in einem Paket bereitgestellt wird.

5. Verfahren nach einem der Ansprüche 1 bis 4, wobei die Metadaten für den Auslieferungsbefähiger von einem Inhaltsanbieter eingebettet wird.

6. Verfahren nach einem der Ansprüche 1 bis 4, wobei die Metadaten für den Auslieferungsbefähiger von einem Auslieferungsserver eingebettet wird.

7. Verfahren nach einem der Ansprüche 1 bis 6, wobei die Inhaltverarbeitungsanweisungen in erweiterbarer Auszeichnungssprache, "Extensible Markup Language", 'XML' ausgedrückt sind.

8. Verfahren nach einem der Ansprüche 1 bis 7, wobei die Metadaten, die mit dem Inhalt verknüpft sind, einen Verweis auf einen Namensraum der erweiterbaren Auszeichnungssprache für den externen Befähiger aufweist.

9. Verfahren nach einem der Ansprüche 1 bis 8, wobei die Metadaten einen Verweises auf ein Schema der erweiterbaren Auszeichnungssprache aufweist, das eine Syntax für den mit Verweis versehenen externen Befähiger festlegt.

10. Element (110, 120) in einem Framework für eine mobile Auslieferung, das dazu konfiguriert ist, das Verfahren nach einem der Ansprüche 1 bis 9 durchzuführen.

11. Element nach Anspruch 10, wobei das Element eines aus einem Inhaltsanbieter (110) und einem Auslieferungsserver (120) ist.

12. Verfahren mit:
Abrufen eines Verweises aus einer Metadaten-(430, 440, 450)-Hülle, die mit Inhalt (412) verknüpft ist, der für einen Inhaltsclient (150) bereitgestellt ist, auf einen externen Befähiger (132, 134, 136, 144, 146, 148), der dazu verwendbar ist, auf Inhalt vor einem oder beidem aus Konsum und Präsentation des Inhalts an dem Inhaltsclient zu arbeiten,
Extrahieren von Inhaltverarbeitungsanweisungen aus der Metadaten-(430, 440, 450)-Hülle, um Funktionalität des externen Befähigers in Anspruch zu nehmen, und
In-Anspruch-Nehmen des externen Befähigers über den Verweis für das Verarbeiten des Inhalts durch einen Auslieferungsbefähiger nach den Inhaltverarbeitungsanweisungen.

13. Verfahren nach Anspruch 12, wobei der externe Befähiger mindestens eines aus einem Anwesenheitsbefähiger, einem Ortungsbefähiger, einem Inhaltfilterungsbefähiger, einem Komprimierungsbefähiger und einem Entpackungsbefähiger ist.

14. Auslieferungsserver, der dazu konfiguriert ist, das Verfahren nach Anspruch 12 oder 13 durchzuführen.

15. Auslieferungsclient, der dazu konfiguriert ist, das Verfahren nach Anspruch 12 oder 13 durchzuführen.

## Revendications

1. Procédé comprenant le fait :
de fournir un contenu (412) pour un client de contenu (150) ;
d'incorporer une référence à un activateur externe (132, 134, 136, 144, 146, 148) dans une enveloppe de métadonnées (430) associée au contenu (412), l'activateur externe étant utilisé pour agir sur ledit contenu avant une consommation et/ou une présentation du contenu au client de contenu (150) ; et
d'insérer, dans l'enveloppe de métadonnées (440, 450) pour un activateur de distribution (120, 140), des instructions de traitement de contenu (442, 444, 452, 454) pour lancer, par l'intermédiaire de la référence, une fonctionnalité de l'activateur externe pour traiter le contenu par l'activateur de distribution avant la consommation du contenu et/ou la présentation du contenu au client de contenu (150).

2. Procédé de la revendication 1, dans lequel le traitement du contenu comporte au moins l'un parmi une manipulation de contenu, un filtrage de contenu, une compression de contenu et une décompression de contenu.

3. Procédé de la revendication 1 ou la revendication 2, dans lequel les métadonnées pour l'activateur de distribution sont incluses en tant que partie du contenu.

4. Procédé de la revendication 1 ou la revendication 2, dans lequel les métadonnées pour l'activateur de distribution sont fournies dans un paquet avec le contenu.

5. Procédé de l'une quelconque des revendications 1 à 4, dans lequel les métadonnées pour l'activateur de distribution sont incorporées par un fournisseur de contenu.

6. Procédé de l'une quelconque des revendications 1 à 4, dans lequel les métadonnées pour l'activateur de distribution sont incorporées par un serveur de distribution.

7. Procédé de l'une quelconque des revendications 1 à 6, dans lequel les instructions de traitement de contenu sont exprimées en langage de balisage extensible 'XML'.

8. Procédé de l'une quelconque des revendications 1 à 7, dans lequel les métadonnées associées au contenu comprennent une référence à un espace de noms de langage de balisage extensible pour l'activateur externe.

9. Procédé de l'une quelconque des revendications 1 à 8, dans lequel les métadonnées comprennent une référence à un schéma de langage de balisage extensible définissant une syntaxe pour l'activateur externe référencé.

10. Élément (110, 120) dans un cadriciel de distribution mobile configuré pour exécuter le procédé de l'une quelconque des revendications 1 à 9.

11. Élément de la revendication 10, l'élément étant l'un parmi un fournisseur de contenu (110) et un serveur de distribution (120).

12. Procédé comprenant le fait :
de récupérer, à partir d'une enveloppe de métadonnées (430, 440, 450) associée à un contenu (412) fourni à un client de contenu (150), une référence à un activateur externe (132, 134, 136, 144, 146, 148) qui peut être utilisée pour agir sur un contenu avant une consommation et/ou une présentation du contenu au client de contenu ;
d'extraire, à partir de l'enveloppe de métadonnées (430, 440, 450), des instructions de traitement de contenu pour lancer une fonctionnalité de l'activateur externe ; et
de lancer l'activateur externe par l'intermédiaire de la référence pour traiter le contenu par un activateur de distribution en fonction des instructions de traitement de contenu.

13. Procédé de la revendication 12, dans lequel l'activateur externe est au moins l'un parmi un activateur de présence, un activateur de localisation, un activateur de filtrage de contenu, un activateur de compression et un activateur de décompression.

14. Serveur de distribution configuré pour exécuter le procédé de la revendication 12 ou 13.

15. Client de distribution configuré pour exécuter le procédé de la revendication 12 ou 13.
